# EUROPEAN PATENT SPECIFICATION

(11) **EP 3 853 474 B1**
(45) Date of publication and mention of the grant of the patent: **15.02.2023**
(21) Application number: 19761778.0
(22) Date of filing: 19.08.2019
(51) Int. Cl.: F03D 17/00, F03D 80/40

(54) **ICE DETECTION METHOD AND SYSTEM FOR A WIND TURBINE**
EISERKENNUNGSVERFAHREN UND -SYSTEM FÜR EINE WINDTURBINE
PROCÉDÉ ET SYSTÈME DE DÉTECTION DE GLACE POUR UNE ÉOLIENNE

(30) Priority: 19.09.2018 ES 201800209
(43) Date of publication of application: 28.07.2021
(73) Proprietor: Siemens Gamesa Renewable Energy Innovation & Technology S.L., 48170 Zamudio, Vizcaya (ES)
(72) Inventor: MUÑOZ BABIANO, Almudena, 28701 Madrid (ES); SANTILLÁN LEÓN, Arturo, 48170 Zamudio, Vizcaya (ES)
(74) Representative: SGRE-Association
(86) International application number: PCT/EP2019/072133
(87) International publication number: WO 2020/057876

(56) References cited:
- EP-A1- 3 009 673
- EP-A1- 3 088 733
- WO-A2-2013/091649
- US-A1- 2013 078 093
- US-B2- 8 186 950

## Description

### FIELD OF THE ART

The present invention relates to methods and systems for detecting ice on wind turbines.

### PRIOR STATE OF THE ART

The presence of wind farms in cold areas makes it necessary to implement systems and methods which are capable of detecting anomalies in the power curve associated with icing or frosting on wind turbines.

Ice build-up on wind turbines entails a serious problem in cold climate areas that reduces energy production and also shortens the estimated service life of the main components in wind turbines. These components can be affected by different types of ice, such as frost, sub-cooled rain, wet snow, etc.

Furthermore, ice build-up is not a problem that only occurs in cold climates as it can happen under many different conditions. Ice can be found in coastal regions, mainly at high latitudes, and also in mountainous terrain. Icing, which occurs when the base of the clouds is located at a height or altitude lower than that of the center or nacelle of the wind turbine, constitutes the main problem in mountainous regions or regions close to mountaintops. Said event is referred to as in-cloud icing. Snowfall is another known cause of icing. A common factor in both cases usually consists of cloudy conditions.

Known standards, such as the ISO 12494 standard, define several types of ice and the weather conditions necessary their formation. The empirical variables include, among others, wind speed and direction, the temperature, and the length of time the cloud contacts the wind turbine. These systems typically use hygrometers based on the principle that the in-cloud water vapor content is very close to or higher than the saturation vapor pressure. This means that the relative humidity is generally higher than 95%. However, said systems are not entirely reliable. In coastal regions and offshore wind farms, the values of relative humidity may be high at all times, even without the presence of any cloud. One of such systems is described in US2005276696A1, which discloses a method for detecting ice on a rotor blade that includes monitoring weather conditions and the physical characteristics of the turbine which may cause mass imbalance between the rotor blades.

Another problem of systems of this type lies in the hygrometer itself. If calibration is performed for a saturation vapor pressure value when said water is in liquid form, this can result in an incorrect measurement of the relative humidity when the temperature is below 0°C. EP2505831A2 belonging to the applicant discloses a system and method for detecting ice on wind turbines that do not have these drawbacks. To that end, the solution disclosed in said document proposes measuring the direct solar radiation received by the corresponding wind turbine by means of a solar radiation sensor, and the measured value is compared with a theoretical radiation curve, wherein the mean values on a cloudy day are clearly below the theoretical curves. Documents US8186950 and US2013/078093 are other prior art examples of methods detecting ice formation on wind turbine blades.

### DESCRIPTION OF THE INVENTION

The object of the invention is to provide a new ice detection method and system for a wind turbine, as defined in the claims.

A first aspect of the invention relates to an ice detection method for a wind turbine, the wind turbine compriings a plurality of blades and a generator. Ambient temperature and humidity are measured in the method, and the following steps are furthermore carried out in said method in a dynamic and recurrent manner (for at least one blade):
- measuring the angular speed of the generator of the wind turbine,
- processing said angular speed to obtain the frequency spectrum thereof,
- identifying a frequency band associated with the frequency characteristic of the blade in said frequency spectrum,
- applying a Kalman filter (or a Kalman algorithm) on said frequency band to identify the instantaneous vibration frequency of said blade,
- comparing said identified instantaneous frequency with a reference frequency that has been previously stored and corresponds with the frequency of the blade when there is no ice thereon, and
- determining the presence of ice on said blade if the identified instantaneous frequency differs from the reference frequency and if the measured temperature and humidity tend to cause icing.

These steps are carried out in a cyclical manner and at all times.

Preferably, the presence or the absence of ice is determined when the difference between the identified instantaneous frequency and the reference frequency is greater than a predetermined threshold. The value of the threshold is determined by the plant controller or the manufacturer, and it can be performed based on previous experiences, for example.

The amount of ice built up on a blade increases blade rigidity, causing variations in its vibration frequency. So, by identifying the instantaneous frequency of the blade (its natural frequency at that time), this instantaneous frequency can be compared with the natural frequency of the blade in the absence of ice (the reference frequency), where any variation between the identified instantaneous frequency and the reference frequency can be detected. This variation is indicative of the possibility of there being ice on the blade, an event which can be confirmed depending on the temperature and humidity at that time. The environmental conditions (temperature and humidity) required for the generation of ice are already known, so if these conditions are detected along with a variation in the identified instantaneous frequency with respect to the reference frequency, the presence of ice on the blade can be determined without any risk of error (or with a high percentage of certainty, compared with current systems).

The identification is performed without having to add additional elements as it is a method that is implemented in the control algorithm of the wind turbine at the software level, since the sensors or detectors required for carrying out the method are present in all conventional wind turbines. This allows using this method in a simple and non-intrusive manner not only in new wind turbines, but also in those wind turbines that have already been installed by simply updating the software, without an additional increase in cost, even with the possibility of remotely charging same.

The implementation of the method would make the detection of ice on blades considerably more reliable as the natural frequencies of the blades do not change unless their physical properties (among them, rigidity, which would be directly related to the presence of ice) change.

The method allows detecting ice in real time without a significant amount of ice having to build up on the wind turbine, where strategies for operating with ice can be activated immediately and/or to apply the required corrective actions, which allows increasing the availability of the wind turbine and reducing the risk of malfunction or even deterioration of the wind turbine.

A second aspect of the invention relates to an ice detection system for a wind turbine. The system is adapted for supporting the method of the first aspect of the invention according to any of the embodiments thereof, the same advantages as those described for the method thereby being obtained in the system.

These and other advantages and features of the invention will become evident in view of the drawings and the detailed description of the invention.

### DESCRIPTION OF THE DRAWINGS

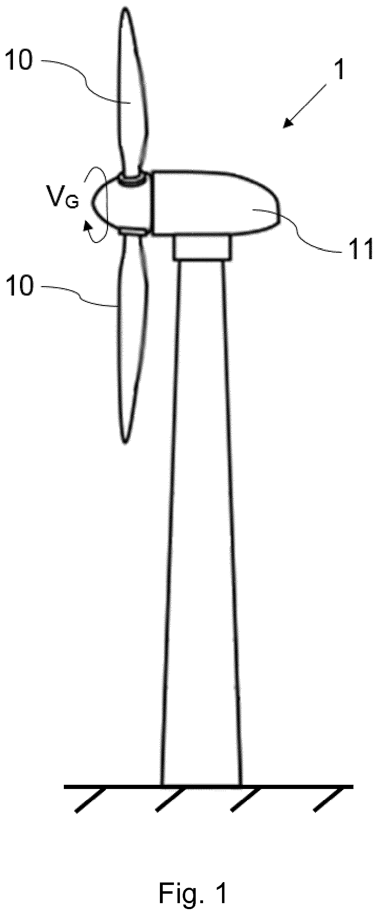

Figure 1 shows a wind turbine.

### DETAILED DESCRIPTION OF THE INVENTION

A first aspect of the invention relates to an ice detection method for a wind turbine 1 like the one shown by way of example in Figure 1, which comprises a plurality of blades 10 and a generator 11 with a rotor. The method is adapted for being implemented on a blade 10, and it is preferably adapted for being implemented on each of the blades 10 of the wind turbine 1 in an independent manner, where the presence or absence of ice can thereby be detected on all the blades 10 in an independent manner.

In normal operation, the blades 10 rotate at a given speed, causing the rotation of the generator 11, such that said generator 11 comprises an angular speed V_{G}. A wind turbine 1 is known to vibrate during its normal operation, and this vibration is known to affect all its elements, including the sensors that it may have, and therefore the measurements taken by said sensors, such that said measurements comprise components relative to said frequencies. Since the natural behavior of the wind turbine 1 is known, it is possible to furthermore identify the origin of the different frequencies resulting from the vibration of the wind turbine 1, i.e., to which part of the wind turbine 1 said vibrations belong.

Ambient temperature and humidity are measured in the method, such that it can be identified whether or not the atmospheric conditions for the generation of ice are met.

The method which is implemented on a blade 10 comprises the following steps, which are carried out in the indicated order:
- measuring the angular speed V_{G} of the generator 11 of the wind turbine 1 (of the rotor of the generator 11),
- processing said angular speed V_{G} to obtain the frequency spectrum thereof,
- identifying a frequency band associated with the frequency characteristic of the blade 10 in said frequency spectrum,
- applying a Kalman filter on said frequency band to identify the instantaneous vibration frequency of said blade 10,
- comparing said identified instantaneous frequency with a reference frequency that has been previously stored and corresponds with the natural frequency of the blade 10 when there is no ice thereon,
- determining the electric power produced by the wind turbine 1, taking the required measurements,
- comparing said electric power which has been determined with the estimated electric power to be produced at that time by the wind turbine 1 (the estimated power can be calculated depending on the wind present at the time, for example), and
- determining the presence of ice on said blade 10 if the variation between the reference frequency and the identified instantaneous frequency is greater than a predetermined threshold, if the electric power produced is less than the estimated electric power, and if the measured temperature and humidity tend to cause icing.

In the method, these steps are furthermore repeated in a dynamic and cyclical manner, which allows detecting the presence or absence of ice continuously and at all times (in real time).

Therefore, the following three conditions must preferably be met in order to determine the presence of ice on a blade 10:
1. determining a variation between the reference frequency and the identified instantaneous frequency that is greater than the predetermined threshold,
2. detecting a temperature and humidity that tend to cause icing, and
3. determining a produced power that is less than the estimated power to be produced. This condition can be considered as having been met simply if the value of the produced power is less than the estimated power, or if said produced power is less than the estimated power by a given percentage. Setting a percentage greatly assures that the drop-in power is due to the presence of ice (if the two preceding conditions are furthermore met), and not to a mere temporary or instantaneous drop due to other causes. The given percentage depends on the requirements of the plant controller and/or the manufacturer of the wind turbine 1, for example.

As mentioned, the angular speed V_{G} of the generator 11 is detected in real time in the method and said angular speed VG is processed. To that end, a digital signal processing technique which may comprise a band-pass filter, a "Goertzel algorithm", or a "Goertzel algorithm" mixture, for example, is applied.

Since the natural frequency band corresponding to each of the elements of the wind turbine 1 is known, it is possible to identify the frequency band associated with the blade 10 at hand in a simple manner. By applying a Kalman filter or algorithm on this identified frequency band, the (non-measurable) concealed states of a linear system can be detected for the purpose of increasing the precision of the measurement. The Kalman filter is known, so its operation is not described in detail.

It has been verified that the variation in the frequency of a blade 10 due to the presence of ice is small, so the application of a Kalman filter seems to be highly relevant to enable detecting the presence of ice in a more reliable manner.

The natural frequency in the plane of rotation of the blade 10 is furthermore preferably selected as the reference frequency, this frequency being commonly known as "in-plane" frequency, and preferably being relative to the 3^{rd} component or the 6^{th} component of the fundamental frequency of the angular speed V_{G}, given that it has been verified that these components undergo variations when ice is present on the corresponding blade 10.

Furthermore, the amount of ice built up on the corresponding blade 10 can be determined in the method depending on the deviation of the given instantaneous frequency with respect to the reference frequency. To that end, as many levels of ice as required are previously established, with a given range of frequencies being associated with each of said levels. The selected frequencies are close to one another, such that the presence of ice similarly affects all of them. When ice is present, the corresponding frequency will undergo a variation between 0.01 Hz and 0.1 Hz, so each range will comprise at least a variation of 0.1 Hz between its maximum frequency and minimum frequency. As ice builds up on the blade 10, the rigidity of the blade 10 increases, which causes the natural frequency of the blade 10 in those conditions to decrease. The more ice formed on the blade 10, the higher the rigidity, and therefore the natural frequency, of the blade will be (the more the identified instantaneous frequency decreases, and the deviation therefore increases with respect to the reference frequency), such that when more additional frequencies (more ranges) are selected with respect to the original natural frequency, more information about the ice built up on the blade 10 can be obtained, i.e., the amount of ice present on the blade 10, and not only the presence or absence of ice, can be identified with greater precision. Therefore, as many frequencies as there are levels of ice to be detected on the blade 10 plus one are previously selected, each level of ice being associated with a range of frequencies established between every two selected frequencies and said additional frequency being the selected frequency which corresponds with a natural frequency (reference frequency) of the corresponding blade 10 of the wind turbine 1. In this case, if the presence of ice on the blade 10 is determined through the determination of a variation in the natural frequency (i.e., the identified instantaneous frequency being different from the reference frequency), the range of frequencies to which said identified instantaneous frequency belongs is identified, and the level of ice present on the blade 10 is determined depending on said identification.

A second aspect of the invention relates to an ice detection system for a wind turbine comprising a plurality of blades 10 and a generator 11, where said system is adapted for supporting the method of the first aspect of the invention in any of its embodiments.

The system comprises a detector (not depicted in the drawing) for detecting the angular speed V_{G} of the generator 11, and a controller (not depicted in the drawing) which is communicated with said detector for receiving said detection and is configured for implementing the method of the first aspect of the invention taking into account said detection. The controller is therefore configured for implementing the filters used and for performing the steps mentioned for the first aspect of the invention based on the detection of the angular speed V_{G} it receives.

The system further comprises a memory with the previously stored reference frequency value, as well as the value of the rest of the selected frequencies, where appropriate, and with the levels of ice associated with each of the ranges of frequencies generated based on said stored frequencies, where said memory can be integrated in the controller or can be an independent element.

## Claims

1. Ice detection method for a wind turbine, the wind turbine (1) comprising a plurality of blades (10) and a generator (11), and the method is carried out for a blade (10) and comprises measuring ambient temperature and ambient humidity, said method further comprising the following steps carried out in that order in a dynamic and cyclical manner:
- measuring the angular speed (V_{G}) of the generator (11) of the wind turbine (1),
- processing said angular speed (V_{G}) to obtain the frequency spectrum thereof,
- identifying a frequency band associated with the frequency characteristic of the blade (10) in said frequency spectrum,
- applying a Kalman filter on said frequency band to identify the instantaneous vibration frequency of said blade (10),
- comparing said identified instantaneous frequency with a reference frequency that has been previously stored, and which corresponds with the natural frequency of the blade (10) when there is no ice thereon,
- determining the electric power produced by the wind turbine (1),
- comparing said electric power which has been determined with an estimated electric power, and
- determining the presence of ice on said blade (10) if the identified instantaneous frequency differs from the reference frequency, if it is detected that the electric power which has been determined is less than the estimated electric power, and if the measured temperature and humidity tend to cause icing.

2. Method according to claim 1, wherein the presence of ice on said blade (10) is determined if the difference between the identified instantaneous frequency and the reference frequency is greater than a given threshold.

3. Method according to claim 2, wherein as many frequencies as there are levels of ice to be detected on the blade (10) plus one are previously selected, each level of ice being associated with a range of frequencies demarcated between every two of said selected frequencies and said additional frequency being the selected frequency which corresponds with a natural frequency or reference frequency of the corresponding blade (10) of the wind turbine (1), and wherein if the presence of ice on the blade (10) is determined, the identified instantaneous frequency is compared with said selected frequencies and the range of frequencies to which it belongs is determined, the level of ice associated with said given range of frequencies being determined as the level of ice present on the blade (10).

4. Method according to claim 3, wherein the natural frequency of the selected corresponding blade (10) is far enough away from the frequencies generated by the rotation of the generator (11) to prevent said natural frequency from being affected by the resonances of said generator (11).

5. Method according to claim 4, wherein the natural frequency of the selected blade (10) corresponds with the 3^{rd} component or the 6^{th} component of the natural in-plane frequency of the corresponding blade (10).

6. Method according to any of claims 3 to 5, wherein all the selected frequencies are close to one another, the frequency spacing between two selected adjacent frequencies being 0.1 Hz and the minimum frequency spacing between two selected adjacent frequencies being 0.01 Hz.

7. Method according to any of claims 1 to 6, which is carried out for each of the blades (10) of the wind turbine (1).

8. Ice detection system for a wind turbine, the wind turbine (1) comprising a plurality of blades (10) and a generator (11), **characterized in that** the ice detection system is adapted for supporting the method according to any of claims 1 to 7.

9. System according to claim 8, comprising a detector for detecting the angular speed (V_{G}) of the generator (11) of the wind turbine (1) and a controller communicated with said detector, the controller being configured for implementing the method according to any of claims 1 to 7 depending on said detection.

10. System according to claim 8 or 9, comprising at least one memory with the value of the previously stored frequencies required for implementing the method.

## Patentansprüche

1. Eiserkennungsverfahren für eine Windkraftanlage, wobei die Windkraftanlage (1) mehrere Blätter (10) und einen Generator (11) umfasst und das Verfahren für ein Blatt (10) ausgeführt wird und das Messen der Umgebungstemperatur und der Umgebungsluftfeuchte umfasst, wobei das Verfahren ferner die folgenden Schritte umfasst, die in dieser Reihenfolge dynamisch und zyklisch ausgeführt werden:
- Messen der Winkelgeschwindigkeit (V_{G}) des Generators (11) der Windkraftanlage (1),
- Verarbeiten der Winkelgeschwindigkeit (V_{G}), um deren Frequenzspektrum zu gewinnen,
- Identifizieren eines Frequenzbandes, das mit der Frequenzkennlinie des Blattes (10) in dem Frequenzspektrum assoziiert ist,
- Anwenden eines Kalman-Filters auf das Frequenzband, um die momentane Vibrationsfrequenz des Blattes (10) zu identifizieren,
- Vergleichen der identifizierten momentanen Frequenz mit einer Referenzfrequenz, die vorab gespeichert wurde und die der Eigenfrequenz des Blattes (10) entspricht, wenn kein Eis auf diesem ist,
- Bestimmen der elektrischen Energie, die von der Windkraftanlage (1) produziert wird,
- Vergleichen der elektrischen Energie, die bestimmt wurde, mit einer geschätzten elektrischen Energie und
- Bestimmen des Vorhandenseins von Eis auf dem Blatt (10), wenn sich die identifizierte momentane Frequenz von der Referenzfrequenz unterscheidet, wenn erkannt wird, dass die elektrischen Energie, die bestimmt wurde, geringer als die geschätzte elektrischen Energie ist und wenn die gemessene Temperatur und Luftfeuchte tendenziell Eis verursachen.

2. Verfahren nach Anspruch 1, wobei das Vorhandensein von Eis auf dem Blatt (10) bestimmt wird, wenn die Differenz zwischen der identifizierten momentanen Frequenz und der Referenzfrequenz größer als ein gegebener Schwellenwert ist.

3. Verfahren nach Anspruch 2, wobei so viele Frequenzen, wie es Höhen von Eis gibt, die auf dem Blatt (10) zu erkennen sind, plus eins vorab ausgewählt werden, wobei jede Höhe von Eis mit einem Bereich von Frequenzen assoziiert ist, der jeweils zwischen zwei ausgewählten Frequenzen demarkiert ist, und jede zusätzliche Frequenz die ausgewählte Frequenz ist, die einer Eigenfrequenz oder Referenzfrequenz des entsprechenden Blattes (10) der Windkraftanlage (1) entspricht, und wobei, wenn das Vorhandensein von Eis auf dem Blatt (10) bestimmt wird, die identifizierte momentane Frequenz mit den ausgewählten Frequenzen verglichen wird und der Bereich von Frequenzen, zu dem sie gehört, bestimmt wird, die Höhe von Eis, die mit dem gegebenen Bereich von Frequenzen assoziiert ist, als die Höhe von Eis bestimmt wird, die auf dem Blatt (10) vorhanden ist.

4. Verfahren nach Anspruch 3, wobei die Eigenfrequenz des ausgewählten entsprechenden Blattes (10) weit genug von den Frequenzen entfernt ist, die durch die Rotation des Generators (11) erzeugt werden, um zu verhindern, dass die Eigenfrequenz von den Resonanzen des Generators (11) beeinflusst wird.

5. Verfahren nach Anspruch 4, wobei die Eigenfrequenz des ausgewählten Blattes (10) der 3. Komponente oder der 6. Komponente der In-Plane-Eigenfrequenz des entsprechenden Blattes (10) entspricht.

6. Verfahren nach einem der Ansprüche 3 bis 5, wobei alle ausgewählten Frequenzen nahe beieinander liegen, wobei der Frequenzabstand zwischen zwei ausgewählten benachbarten Frequenzen 0,1 Hz beträgt und der Frequenzmindestabstand zwischen zwei ausgewählten Frequenzen 0,01 Hz beträgt.

7. Verfahren nach einem der Ansprüche 1 bis 6, das für jedes der Blätter (10) der Windkraftanlage (1) ausgeführt wird.

8. Eiserkennungssystem für eine Windkraftanlage, wobei die Windkraftanlage (1) mehrere Blätter (10) und einen Generator (11) umfasst, **dadurch gekennzeichnet, dass** das Eiserkennungssystem dafür eingerichtet ist, das Verfahren nach einem der Ansprüche 1 bis 7 zu unterstützen.

9. System nach Anspruch 8, einen Detektor zum Erkennen der Winkelgeschwindigkeit (V_{G}) des Generators (11) der Windkraftanlage (1) und eine Steuerung umfassend, die kommunikationsfähig mit dem Detektor verbunden ist, wobei die Steuerung dafür gestaltet ist, das Verfahren nach einem der Ansprüche 1 bis 7 in Abhängigkeit von der Erkennung zu realisieren.

10. System nach Anspruch 8 oder 9, mindestens einen Speicher mit dem Wert der vorab gespeicherten Frequenzen umfassend, die zum Realisieren des Verfahrens erforderlich sind.

## Revendications

1. Procédé de détection de glace pour une éolienne, l'éolienne (1) comprenant une pluralité de pales (10) et un générateur (11), et le procédé est réalisé pour une pale (10) et comprend l'étape consistant à mesurer la température ambiante et l'humidité ambiante, ledit procédé comprenant en outre les étapes suivantes réalisées dans cet ordre d'une manière dynamique et cyclique, consistant à :
mesurer la vitesse angulaire (V_{G}) du générateur (11) de l'éolienne (1),
traiter ladite vitesse angulaire (V_{G}) pour obtenir son spectre de fréquences,
identifier une bande de fréquences associée à la caractéristique de fréquence de la pale (10) dans ledit spectre de fréquences,
appliquer un filtre de Kalman sur ladite bande de fréquences pour identifier la fréquence de vibration instantanée de ladite pale (10),
comparer ladite fréquence instantanée identifiée avec une fréquence de référence qui a été précédemment mémorisée, et qui correspond à la fréquence naturelle de la pale (10) lorsqu'elle est dépourvue de glace,
déterminer la puissance électrique produite par l'éolienne (1),
comparer ladite puissance électrique qui a été déterminée avec une puissance électrique estimée, et
déterminer la présence de glace sur ladite pale (10) si la fréquence instantanée identifiée diffère de la fréquence de référence, si l'on détecte que la puissance électrique qui a été déterminée est inférieure à la puissance électrique estimée, et si la température et l'humidité mesurées ont tendance à provoquer de la glace.

2. Procédé selon la revendication 1, dans lequel la présence de glace sur ladite pale (10) est déterminée si la différence entre la fréquence instantanée identifiée et la fréquence de référence est supérieure à un seuil donné.

3. Procédé selon la revendication 2, dans lequel autant de fréquences qu'il y a de niveaux de glace à détecter sur la pale (10) plus un ont été précédemment sélectionnées, chaque niveau de glace étant associé à une plage de fréquences démarquées entre deux desdites fréquences sélectionnées et ladite fréquence supplémentaire étant la fréquence sélectionnée qui correspond à une fréquence naturelle ou fréquence de référence de la pale (10) correspondante de l'éolienne (1), et dans lequel si la présence de glace sur la pale (10) est déterminée, la fréquence instantanée identifiée est comparée avec lesdites fréquences sélectionnées et la plage de fréquences à laquelle elle appartient est déterminée, le niveau de glace associé à ladite plage donnée de fréquences étant déterminé comme étant le niveau de glace présent sur la pale (10).

4. Procédé selon la revendication 3, dans lequel la fréquence naturelle de la pale (10) correspondante sélectionnée est assez loin des fréquences générées par la rotation du générateur (11) pour empêcher ladite fréquence naturelle d'être affectée par les résonances dudit générateur (11).

5. Procédé selon la revendication 4, dans lequel la fréquence naturelle de la pale (10) sélectionnée correspond au 3^{ième} composant ou au 6^{ième} composant de la fréquence en plan naturelle de la pale (10) correspondante.

6. Procédé selon l'une quelconque des revendications 3 à 5, dans lequel toutes les fréquences sélectionnées sont proches les unes des autres, l'espacement de fréquence entre deux fréquences adjacentes sélectionnées étant de 0,1 Hz et l'espacement de fréquence minimum entre deux fréquences adjacentes sélectionnées étant de 0,01 Hz.

7. Procédé selon l'une quelconque des revendications 1 à 6, qui est réalisé pour chacune des pales (10) de l'éolienne (1).

8. Système de détection de glace pour une éolienne, l'éolienne (1) comprenant une pluralité de pales (10) et un générateur (11), **caractérisé en ce que** le système de détection de glace est adapté pour supporter le procédé selon l'une quelconque des revendications 1 à 7.

9. Système selon la revendication 8, comprenant un détecteur pour détecter la vitesse angulaire (V_{G}) du générateur (11) de l'éolienne (1) et un organe de commande communiquant avec ledit détecteur, l'organe de commande étant configuré pour mettre en œuvre le procédé selon l'une quelconque des revendications 1 à 7, en fonction de ladite détection.

10. Système selon la revendication 8 ou 9, comprenant au moins une mémoire avec la valeur des fréquences préalablement mémorisées nécessaires pour la mise en œuvre du procédé.
